# FASCICULE DE BREVET EUROPEEN

(11) **EP 1 831 591 B1**
(45) Date de publication et mention de la délivrance du brevet: **25.02.2009**
(21) Numéro de dépôt: 05824239.7
(22) Date de dépôt: 01.12.2005
(51) Int. Cl.: F16H 57/04

(54) **DISPOSITIF DE GUIDAGE D'HUILE POUR ARBRE CREUX DE BOITE DE VITESSES**
ÖLFÜHRUNGSVORRICHTUNG FÜR GETRIEBEHOHLWELLE
OIL GUIDING DEVICE FOR GEARBOX HOLLOW SHAFT

(30) Priorité: 20.12.2004 FR 0453069
(43) Date de publication de la demande: 12.09.2007
(73) Titulaire: RENAULT S.A.S., 92100 Boulogne Billancourt (FR)
(72) Inventeur: GERMAIN, Arnaud, F-91120 Palaiseau (FR); PELOUARD, Pascal, F-78170 Epone (FR)
(74) Mandataire: Rougemont, Bernard
(86) Numéro de dépôt international: PCT/FR2005/051024
(87) Numéro de publication internationale: WO 2006/067341

(56) Documents cités:
- DE-A1- 3 422 048
- DE-A1- 10 325 887
- US-A- 3 785 458
- US-A- 4 480 493
- US-A- 4 501 167
- US-A- 5 667 036

## Description

La présente invention se rapporte à la lubrification de boîte de vitesses, et plus précisément la lubrification d'un empilement de pignons sur un arbre creux de boîte de vitesses, par un flux d'huile circulant à l'intérieur de celui-ci,

Elle a pour objet un dispositif de guidage d'huile à l'intérieur d'un arbre creux de boîte de vitesses supporté dans le carter de la boîte par au moins un palier de roulement à l'une de ses extrémités, et présentant un déflecteur de récupération d'huée coiffant au moins partiellement l'extrémité de l'arbre et ses roulements du palier, raccordé à une canule tubulaire d'introduction d'huile, engagée à l'intérieur de l'arbre creux.

Avec un tel dispositif, la lubrification interne d'un empilage de boîte de vitesses se fait en déversant de l'huile par une canule à l'entrée du perçage axial de l'arbre. Cette huile rentre dans la canule après s'être accumulée dans une réserve d'huile s'établissant entre le carter et un déflecteur perpendiculaire à l'arbre.

Selon une disposition connue, illustrée par la publication DE 34 22 048, qui montre toutes les characteristiques du préambule de la revendication 1, le déflecteur n'est pas plaqué contre le carter de la boîte, mais il subsiste un espace d'environ deux millimètres entre le déflecteur et le carter. Cet espace est alimenté en huile par une gorge pratiquée dans le carter en dessous de l'axe du palier et il constitue une réserve d'huile qui est isolée du mouvement de rotation de l'arbre et du roulement par le déflecteur et se remplit généralement en huile jusqu'à l'axe du palier. L'huile s'écoule alors par la canule dans le perçage axial de l'arbre.

Dans une telle disposition, l'espace réservé à l'intérieur du carter, derrière le déflecteur, « coûte » au moins deux millimètres de longueur à la boîte.

L'invention vise à supprimer cet espace perdu, en vue de « gagner » la longueur correspondante pour réduire la longueur totale de la boîte.

Dans ce but, elle propose que le déflecteur présente une découpe garnie sur ses bords, de patins perpendiculaires à son plan.

De préférence, les patins sont orientés en direction de la canule.

Selon un mode de réalisation préféré, la découpe est une ouverture en V dont le sommet s'étend jusqu'à la canule.

Ainsi, le déflecteur bloque la mise en rotation de l'huile par le roulement, et la fait ruisseler sur sa tranche jusque dans la canule.

D'autres caractéristiques et avantages de l'invention, seront mieux compris à la lecture de la description suivante d'un mode de réalisation non limitatif de celle-ci, en se reportant aux dessins annexés, sur lesquels :
- la figure 1 illustre l'art antérieur,
- la figure 2 est une vue en perspective du dispositif proposé, et
- la figure 3 montre l'implantation de ce dispositif dans la boîte.

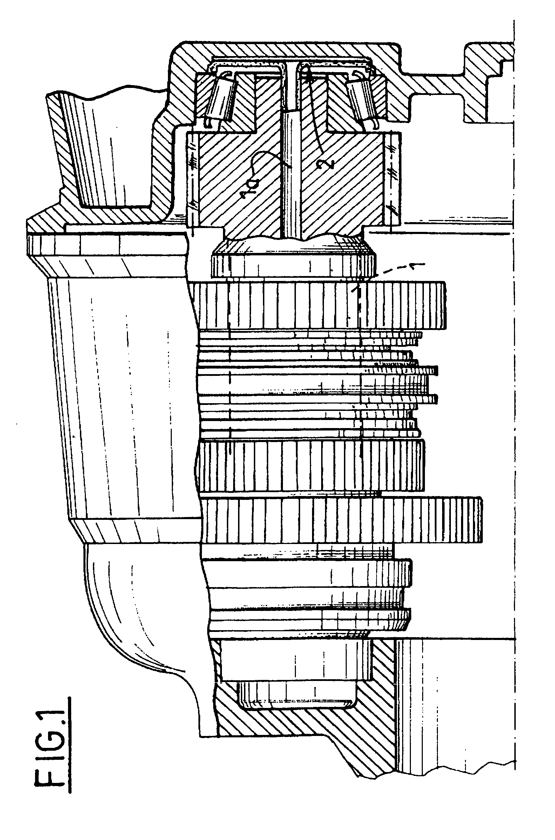

Sur la figure 1, on a fait apparaître en extrémité d'un arbre creux 1 de boîte de vitesses, un dispositif de guidage d'huile 2 connu de l'art antérieur, engagé à l'intérieur de l'arbre 1. Conformément à la publication DE 3422048 mentionnée ci-dessus, la partie de ce dispositif formant déflecteur 3 est distante du carter 4 de la boîte, pour pouvoir capter l'huile et la diriger vers sa partie tubulaire 9. Selon une disposition connue, la lubrification interne d'un empilage de pignons d'une boîte de vitesses, peut en effet s'effectuer en collectant l'huile projetée par les pignons de la boîte dans une goulotte (non représentée) pour la déverser dans une gorge du palier et la déverser dans le perçage axial de l'arbre par une canule, engagée dans l'entrée de ce perçage. L'huile rentre alors dans la canule après s'être accumulée une réserve telle que l'espace 5 apparaissant sur la figure 1 entre le déflecteur 3 et le carter 4.

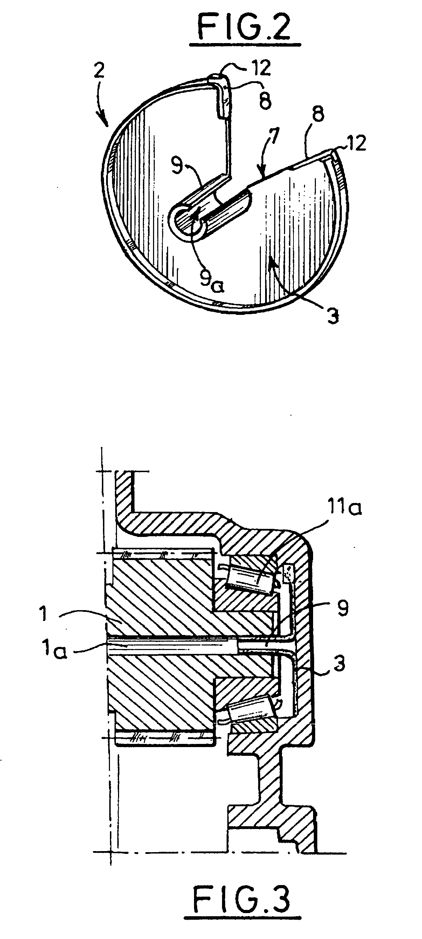

Sur la figure 3, illustrant le montage proposé par l'invention, on voit que le déflecteur 3 est plaqué contre le carter 4. Cette nouvelle disposition est autorisée grâce à la découpe 7 montrée par la figure 2, et aux patins latéraux 8 perpendiculaires au plan du déflecteur 3.

Le dispositif de guidage 2 de l'invention, montré sur la figure 2, est composé d'un déflecteur 3, raccordé à une canule tubulaire d'introduction d'huile 9 dans un arbre creux 1 de boîte de vitesses. L'arbre 1 est supporté dans le carter 4 de la boîte de vitesses par un palier de roulement 11 à au moins une de ses extrémités. Le déflecteur 3 coiffe au moins partiellement l'extrémité de l'arbre 1 et les roulements 11a de son palier 11. Pour récupérer l'huile et la diriger sur la canule 9, les patins 8 sont orientés en direction de celle-ci, perpendiculairement au plan du déflecteur 3. Selon une autre caractéristique de l'invention, la découpe 7 est une ouverture en V dont le sommet rejoint la canule 9qui pénètre dans le perçage axial la de l'arbre 1. La découpe 7 peut éventuellement se prolonger par une ouverture longitudinale 9a sur le dessus de la canule, qui est alors ouverte sur toute sa longueur.

La fonction exacte des patins 8 est d'arrêter le mouvement de rotation de l'huile entraînée par la bague intérieure 11b du roulement. Grâce aux patins 8, l'huile ruisselle sur la tranche du déflecteur 3 jusqu'à son centre et s'écoule dans la canule 9, puis dans le perçage axial la de l'arbre 1.

Selon une autre disposition de l'invention, la découpe 7 du déflecteur 3 est indexée au montage vis-à-vis du déversoir d'alimentation du palier non représenté). Une solution consiste par exemple à disposer sur le déflecteur deux ergots d'indexage 12, qui viennent se loger au montage dans deux gorges du carter 4 (non représentées).

Conformément à la figure 2, les ergots peuvent être disposés aux deux extrémités de la découpe, au bord des patins 8. Grâce à ces dispositions, le déflecteur 3 peut récupérer l'huile, tout en étant plaqué contre le carter 4, puisqu'il est coincé axialement entre le carter 4 et la bague extérieure du roulement 11b.

En conclusion, l'invention permet de faire rentrer de l'huile dans la canule, et donc dans l'arbre creux sans avoir à créer une réserve d'huile, ce qui permet de gagner la longueur de la réserve habituelle, sur la longueur totale de la boîte. Cette invention participe donc à une réduction d'encombrement en longueur du groupe moto-propulseur intégrant la boîte, et facilite ainsi son montage dans des véhicules plus compacts.

## Revendications

1. Dispositif de guidage d'huile (2) à l'intérieur d'un arbre creux (1) qui est supporté dans un carter (4) de boîte de vitesses à au moins une de ses extrémités un palier de roulement (11), présentant un déflecteur de récupération d'huile (3) coiffant au moins partiellement l'extrémité de l'arbre et ses roulements (11a) du palier, raccordé à une canule tubulaire (9) d'introduction d'huile engagée à l'intérieur de l'arbre creux (1), **caractérisé en ce que** le déflecteur (3) présente une découpe (7) garnie sur ses bords de patins (8) perpendiculaires à son plan.

2. Dispositif de guidage selon la revendication 1, **caractérisé en ce que** les patins (8) sont orientés en direction de la canule (9).

3. Dispositif de guidage d'huile selon la revendication 1, **caractérisé en ce que** la découpe (7) est une ouverture en V dont le sommet rejoint la canule (9).

4. Dispositif de guidage d'huile selon la revendication 1 ou 2, **caractérisé en ce que** la découpe (7) est indexée vis-à-vis de l'arrivée d'huile sur le palier (11).

5. Dispositif de guidage d'huile selon l'une des revendications 1 à 4, **caractérisé en ce que** le déflecteur (3) porte des ergots d'indexage (12) venant se loger dans des gorges du carter (4).

6. Dispositif de guidage selon la revendication 5, **caractérisé en ce que** les ergots (12) sont disposés aux extrémités de la découpe (7) .

7. Dispositif de guidage d'huile selon l'une des revendications précédentes, **caractérisé en ce que** le déflecteur (3) est coincé axialement entre le carter (4) et la bague extérieure du roulement (11b).

8. Dispositif de guidage d'huile selon l'une des revendications précédentes, **caractérisé en ce que** la découpe (7) se prolonge par une ouverture longitudinale (9a) sur le dessus de la canule (9).

9. Dispositif de guidage d'huile selon la revendication précédente, **caractérisé en ce que** la canule (9) est ouverte sur toute sa longueur.

10. Dispositif de guidage selon l'une des revendications 6 à 9, **caractérisé en ce que** les ergots (12) sont disposés au bord des patins (8).

## Claims

1. Device (2) for the guidance of oil inside a hollow shaft (1) that is supported in a gearbox housing (4) at at least one of its ends, a rolling bearing (11) having an oil recovery deflector (3) at least partially capping the end of the shaft and its bearing rolling elements (11a), connected to a tubular oil insertion canula (9) engaged inside the hollow shaft (1), **characterized in that** the deflector (3) has a cutout (7) furnished on its edges with pads (8) perpendicular to its plane.

2. Guidance device according to Claim 1, **characterized in that** the pads (8) are oriented in the direction of the canula (9).

3. Oil guidance device according to Claim 1, **characterized in that** the cutout (7) is a V-shaped opening whose apex joins the canula (9).

4. Oil guidance device according to Claim 1 or 2, **characterized in that** the cutout (7) is indexed relative to the arrival of oil on the bearing (11) .

5. Oil guidance device according to one of Claims 1 to 4, **characterized in that** the deflector (3) supports indexing lugs (12) being housed in grooves of the housing (4).

6. Guidance device according to Claim 5, **characterized in that** the lugs (12) are placed at the ends of the cutout (7).

7. Oil guidance device according to one of the preceding claims, **characterized in that** the deflector (3) is immobilized axially between the housing (4) and the outer race of the rolling element (11b).

8. Oil guidance device according to one of the preceding claims, **characterized in that** the cutout (7) is extended by a longitudinal opening (9a) on the top of the canula (9).

9. Oil guidance device according to the preceding claim, **characterized in that** the canula (9) is open over its whole length.

10. Guidance device according to one of Claims 6 to 9, **characterized in that** the lugs (12) are placed on the edge of the pads (8).

## Patentansprüche

1. Ölführungsvorrichtung (2) ins Innere einer Hohlwelle (1), die in einem Gehäuse (4) eines Schaltgetriebes an mindestens einem ihrer Enden von einem Lagergehäuse (11) getragen wird, mit einem Ölrückgewinnungs-Ablenkblech (3), welches mindestens teilweise das Ende der Welle und die Lager (11a) des Lagergehäuses überdeckt, verbunden mit einer rohrförmigen Ölzufuhrkanüle (9), die ins Innere der Hohlwelle (1) eingeführt ist, **dadurch gekennzeichnet, dass** das Ablenkblech (3) einen Ausschnitt (7) aufweist, der an seinen Rändern mit zu seiner Ebene lotrechten Gleitern (8) versehen ist.

2. Führungsvorrichtung nach Anspruch 1, **dadurch gekennzeichnet, dass** die Gleiter (8) in Richtung der Kanüle (9) ausgerichtet sind.

3. Ölführungsvorrichtung nach Anspruch 1, **dadurch gekennzeichnet, dass** der Ausschnitt (7) eine V-förmige Öffnung ist, deren Spitze an die Kanüle (9) anschließt.

4. Ölführungsvorrichtung nach Anspruch 1 oder 2, **dadurch gekennzeichnet, dass** der Ausschnitt (7) gegenüber dem Ölzulauf am Lagergehäuse (11) indexiert ist.

5. Ölführungsvorrichtung nach einem der Ansprüche 1 bis 4, **dadurch gekennzeichnet, dass** das Ablenkblech (3) Indexierzapfen (12) trägt, die sich in Rillen des Gehäuses (4) einfügen.

6. Führungsvorrichtung nach Anspruch 5, **dadurch gekennzeichnet, dass** die Zapfen (12) an den Enden des Ausschnitts (7) angeordnet sind.

7. Ölführungsvorrichtung nach einem der vorhergehenden Ansprüche, **dadurch gekennzeichnet, dass** das Ablenkblech (3) axial zwischen dem Gehäuse (4) und dem Außenring des Lagers (11b) eingeklemmt ist.

8. Ölführungsvorrichtung nach einem der vorhergehenden Ansprüche, **dadurch gekennzeichnet, dass** der Ausschnitt (7) sich über eine Längsöffnung (9a) an der Oberseite der Kanüle (9) verlängert.

9. Ölführungsvorrichtung nach dem vorhergehenden Anspruch, **dadurch gekennzeichnet, dass** die Kanüle (9) über ihre ganze Länge offen ist.

10. Führungsvorrichtung nach einem der Ansprüche 6 bis 9, **dadurch gekennzeichnet, dass** die Zapfen (12) am Rand der Gleiter (8) angeordnet sind.
